Europäisches Patentamt

(19) European Patent Office

Office européen des brevets

(11) Publication number: **0 340 545 B1**

## (12) EUROPEAN PATENT SPECIFICATION

(45) Date of publication of patent specification: **19.11.92**   (51) Int. Cl.⁵: **F02B 47/10**, F02B 43/10

(21) Application number: **89107089.8**

(22) Date of filing: **20.04.89**

(54) **Closed circuit system for a combustion engine recycling the exhaust gases.**

(30) Priority: **04.05.88 IT 2045088**

(43) Date of publication of application:
**08.11.89 Bulletin 89/45**

(45) Publication of the grant of the patent:
**19.11.92 Bulletin 92/47**

(84) Designated Contracting States:
**AT BE CH DE ES FR GB GR IT LI LU NL SE**

(56) References cited:
**WO-A-85/02244**      **DE-A-26 036 64**
**FR-A- 1 240 316**      **FR-A- 2 274 786**
**GB-A- 2 027 485**      **US-A- 3 559 402**

(73) Proprietor: **Santi, Giunio Guido**
**Via 3a Armata, 6**
**I-34123 Trieste(IT)**

(72) Inventor: **Santi, Giunio Guido**
**Via 3a Armata, 6**
**I-34123 Trieste(IT)**

(74) Representative: **Jaumann, Paolo**
**Studio Brevetti Jaumann S.n.c. Piazza**
**Castello, 2**
**I-20121 Milano(IT)**

Rank Xerox (UK) Business Services

## Description

### STATE OF THE ART

The internal combustion engine or gas turbine operating with the recycle of the exhaust gases, improperly defined as closed circuit combustion engine while it is truly a semiclosed Internal Combustion Engine, or a semiclosed gas turbine, for submarine use, is an old idea developed by several inventors of various nations.

Of all the Patents examined by us we have found only three inventors who have tried to give a global solution to the problem of trasforming a semiclosed circuit into a closed circuit, namely Stone (US-A-3 559 402), Karig (US-A-3 775 976) and Teonomare (IT-A-22885/87), even if they concentrate themselves on the solution of the problem related to the handling and storage of the CO2 only produced during the combustion while the rest of the inventors concentrate themselves on the solution only of the problem of how to make work an I.C. engine operating by recycling the exhaust gases.

Bearing in mind that the I.C. engine operating under the principles of recycling the exhaust gases has the major application in the field of authonomous submarine vehicles, or of manned submarines, the problems which must be solved are those related to:
- keeping the mass constant;
- minimizing the volumes dedicted to the propulsion system;
- simplifying the global system.

Moreover it is very important to make the system independent from the ambient constraints namely:
- the water pressure related to the operating depth;
- the water temperature at operating depth which might reach an average of 27° celsius either near the surface, in tropical or mediteranean waters, or at depth near submarine volcanoes.

It must also be considered that all the components of a submarine, or of an authonomous submarine vehicle, have to be contained within the so called "envelope displacement"; as small is the volume dedicated to the propulsion system as big is the volume available for the paying load.

In order to tackle the above mentioned problems, which have been neglected by all authors examined but for Stone, Karig and Teonomare, they three propose to store the products of combustion, namely water and CO2, in specially made dedicated tanks, one or more for the water and one or more for the CO2; all of them propose to liquefy the CO2 at cryogenic temperature, well below the temperature of the sea-water, in order to minimize the work of the exhaust gas compressor which is a constant of all recycling engines.

In order to solve the problem related to the cryogenic condensation of the CO2, in relation to the water temperature of the sea which cannot be used directly as a heat sink, all three of them use as supporter of combustion liquid oxygen only, at cryogenic temperature; Karig and Teonomare even propose to use LNG as fuel. The cryogenic energy of the LOX, liquid oxygen, and if available the cryogenic energy of the fuel, in the case of the LNG, is used to liquify the Carbon Dioxide well below the zero degree Centigrade and the liquid CO2 so obtained is then stored in a specially dedicated cryogenic container.

In this way, while the problem related to the constancy of the mass and the independancy from the water depth are solved, the system is complicated by the solutions chosen. That is: the constraints caused by LOX storage, cryogenic cooling and dedicated cryogenic storage tanks, with the complication connected and the unavoidable increase of the volume of the propulsion system just to solve the problem caused by the sea-water temperature near the critical temperature of the CO2 which will not allow liquefaction of the same at any pressure.

The objective of the present invention is to solve totally the five problems nominated in the beginning with a solution which is global, simple and functional.

### Disclosure of the invention

The proposed propulsion system, contained in a given "envelope displacement" is made of one or more tanks for the liquid fuel, diesel fuel or another liquid hydrocarbon, one or more tanks for the oxygen, in gaseous or liquid forms, of one service tank constituted by a pressure vessel capable of receiving and containing compressed gas, one Internal Combustion engine or gas turbine recycling the exhaust gases, one vacuum pump/compressor and one H.P. compressor made of only the second and third stage of compression named "overpressor".

The Carbon Dioxide produced during the combustion, coming out as surplus from the recycling circuit of the I.C. engine or gas turbine, is compressed at a minimum pressure of 40 ata, absolute atmospheres, cooled in the vicinity of its critical temperature, as the sea-water or heat sink can be in the neighbourhood of 27° Centigrade.

In this conditions, assuming an outlet temperature of the CO2, from the after cooler of the high pressure compressor or "overpressor", around the 35° centigrade, which is well above the critical temperature of the CO2 that thus remains gaseous, at 40 ata, its specific weight is of about 90 kg/mc in gaseous form, equivalent to oxygen compressed to 71 ata.

Compressing the gaseous $CO_2$ to 75 ata, its specific weight will reach, always at 35° C , 474 KG/mc equivalent to gaeous oxygen compressed at about 370 ata.

Comparing this figures it appears that in relation to the charging pressure of the gaseous oxygen it is possible to obtain with the high pressure compressor/second third stage only, or "overpressor", a compressed gaseous $CO_2$ at a much lower pressure than that of the oxygen with a specific weight equivalent to that of the gaseous oxygen stored at a much higher pressures, and thus be in a position to exploit for the storage of the $CO_2$ produced during the combustion the same volumes originally dedicated to the gaseous oxygen necessary for the combustion, without being compelled to liquify the $CO_2$, with a big advantage as for as the simplicity of the plant is concerned and the economy of the volumes.

This applies also in the case of storage of liquid oxygen; in this case it will be convenient to increase the delivery pressure of the HP compressor /second third stage only, or "overpressor", up to 120 ata; at 35° C the specific weight of the gaseous $CO_2$ is of about 800 kg/mc compared to 1140 kg/mc of the Lox, thus minimizing the extra volume required for storing the $CO_2$ produced during the combustion.

Moreover with this system it is possible to recover the extra oxygen which is always present in the exhaust gases of any thermal plant, I.C. engine or gas turbine which operate with the so called "excess air" for the proper combustion, and this is possible by taking advantage of the dramatic difference in the specific weight of the two gases.

In the hypothesis of the presence of 10% of oxygen in the exhaust gases, or even of 20% at small load, the oxygen will have a specific weight of 95 kg/mc versus the 274 kg/mc of the $CO_2$ in the gaseous mixture compressed at 75 ata and 35 C.

The I.C. engine, or the gas turbine, operating with the recycle of the exhaust gases, as universally known and in particular as described in all the Patents which we have examined, can be divided in two main categories namely:
- semiclosed circuit;
- closed circuit.

Semiclosed circuit means the expulsion overboard of the $CO_2$ produced by the combustion while closed circuit means that the $CO_2$ produced by the combustion is liquified at cryogenic temperature and then stored on board in a dedicated cryogenic tank while in both cases the water vapour, produced by the combustion, is condensated at ambient temperature by the sea-water acting as the heat sink, and thus pumped overboard or stored on board in a dedicated tank.

## Description of the state of the Art

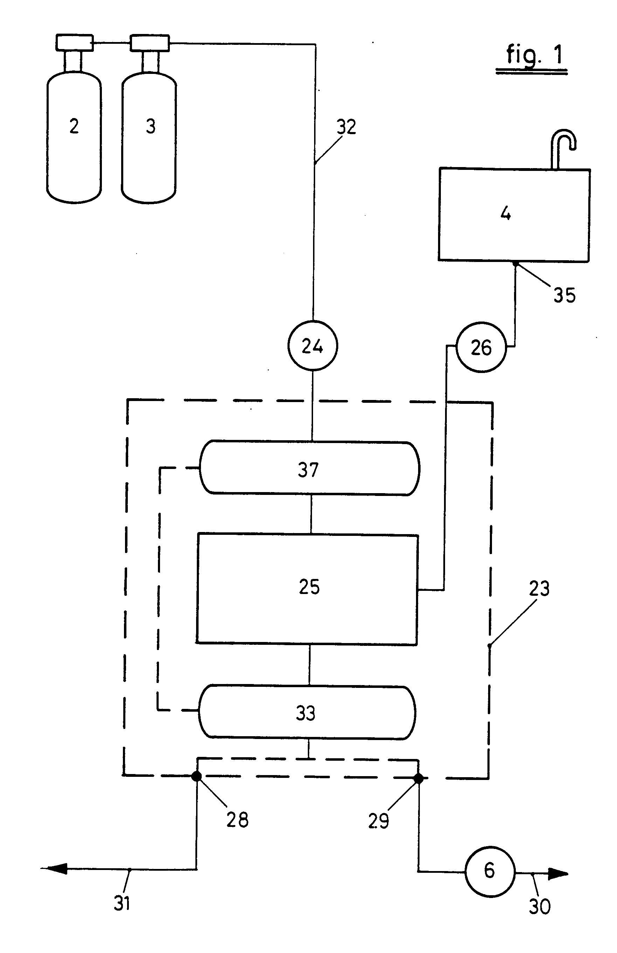

Diagrammatically all inventions can be represented as indicated in fig. 1, namely:
- one set of oxygen tanks, liquid or gaseous, indicated by 2 and 3, one supply line 32, one pressure reducer/metering device 24, which supply the mixing chamber/intake manifold 37 of the diesel engine, or gas turbine, 25.

One or more fuel tanks 4, equipped with overflow pipe, or pressurizing system, which through the fuel pump 26 supply the injection system of the combustion engine 25. One exhaust manifold 33 from which, through the recycle components of the recycling circuit 23, one part of the exhaust gases is recycled to the mixing chamber 37, where the depleted oxygen is added by injection and diluited, while the fraction corresponding to the products of combustion themselves are expelled by the circuit 23 itself in two different parts, namely: the water through outlet 29 and the $CO_2$, plus the residual oxygen consequent of the combustion taking place in the presence of an "excess air" through outlet 28, which is always overpressurized with respect of chamber 37.

From the outlet 29 the water, produced by the combustion, through the dedicated pump 6, is conveyed through line 30 either in a dedicated storage tank or pumped overboard.

From outlet 28 the $CO_2$ produced by the combustion, and the oxygen possibly present as consequence of the "excess air", through line 31 is expelled overboard, possibly after a treatment to recover the oxygen, or is stored in a dedicated cryogenic tank according a specific circuit which is not indicated on the figure 1.

It is evident from this brief description that in the circuit of state of the Art, as it is represented for example in US-A-3559402, which forms the basis of the preamble of claim 1 and as it can be deducted from the analysis of all Patents quoted in the introduction of this Patent, there is always a compressor or equivalent device to compress the gaseous by-products of combustion similar in function to the pump 6 for the water produced during the same combustion.

The subject of our invention, is a system which transforms an I.C. engine, or gas turbine, operating under the recycling of the exhaust gases, into a closed circuit I.C. engine, or gas turbine, without the need of liquifying cryogenically the $CO_2$ for storage purposes nor to have dedicated tanks for the $CO_2$ only or the water produced.

In our invention, which is the subject of this Patent, the closed circuit for the operation of an I.C. engine, or a gas turbine, which is functioning by the recycling system of the exhaust gases at constant mass, i.e. fuel and oxygen "in" and water and Carbon Dioxide "out", is constituted by the

- one or several tanks of oxygen either gaseous or liquid or a combination of the two;
- one or several tanks for the liquid fuel, generally diesel or cherosene;
- one diesel engine, or gas turbine, operating on the recycling of exhaust gases for submarine use;
- one service tank made of a pressure vessel operating at 40 ata or over;
- one "overpressor", i.e. one high pressure compressor which can be fed with gas entering the inlet valve at a pressure above atmospheric;
- one vacuum pump/compressor.

Let us examine now the functioning of the invention through the analysis of an example which cannot be considered as a limitation but only a possible embodiment of the invention.

Description of the preferred embodiement

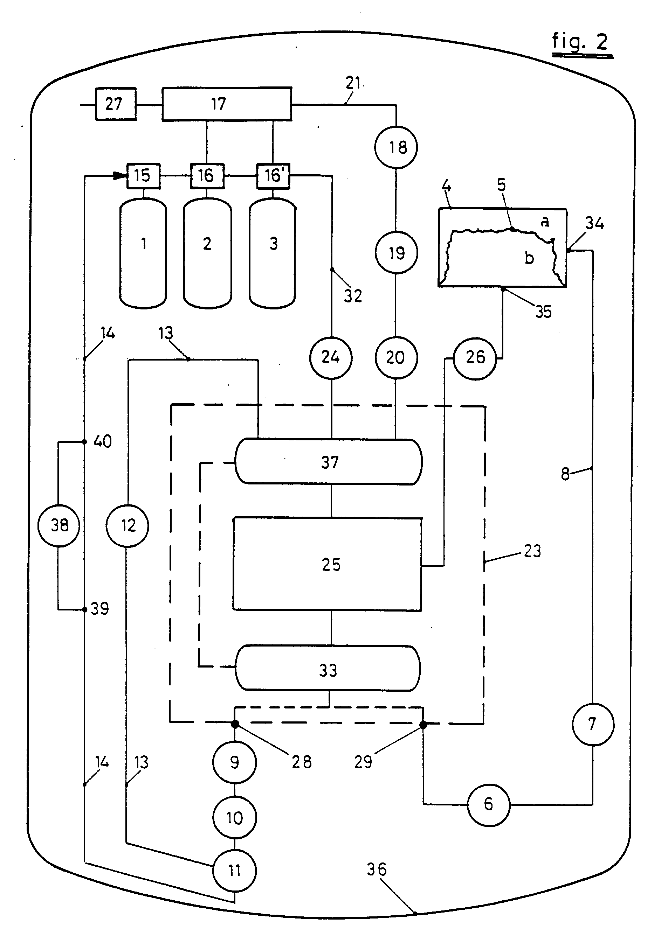

Let us examine the made of, and the functioning of the closed circuit as indicated in fig. 2.

The system of the tanks containing the oxygen supporter of the combustion 2 and 3 are completed by the service tank 1, which is an integral part of the present invention, and is always empty to 1 ata when the tanks 2 and 3 are full at charging pressure, made of a pressure resistant vessel, and are connected to each other through valve 15 with two outlets and valves 16 and 16' with three outlets. Valves 15, 16 and 16' are equipped with a pressure reducer to mantain in the pertinent lines the set pressures. These tanks, through line 32 feed mixing chamber 37 of the recycle diesel engine 25 through the pressure reducer/metering valve 24. The service tank pressure resistant 1 and the oxygen tanks, liquid or gaseous 2 and 3, are also connected with the manifold 17, through the valves at three outlets 16 and 16'; the manifold 17 is equipped also on one side with valve 27 and on the other end with an outlet which, through line 21 feeds the vacuum pump/compressor 18, equipped with an aftercooler cooled by sea-water.

The outlet of the vacuum pump/compressor, generally a membrane compressor suitable for the compressor of pure oxygen, is connected with the pressure tank 19 from which, through the pressure reducer/metering valve 20, the oxygen so regulated is conveyed to the mixing/inlet chamber 37.

The fuel tank 4, which is an integral part of our invention and can be made of one container or of several containers, is equipped internally by a flexible, water proof diaphragm 5.

This diaphragm divides the total volume of the fuel tank in two volumes indicated by "a" and "b"; in fig. 2 the volume indicated with "a" cannot be filled with fuel, while the volume indicated with "b" can be filled with fuel only.

The net volume "a+b" of the fuel tank 4, or of the complex of the fuel tanks 4, has a total volume which is at least 3% more than the volume of the fuel loaded.

This is because during the combustion every kg of diesel fuel, which has a specific gravity of 0,82 kg/lt and therefore a volume of about 1,22 lt, produces an average of 1,26 kg of fresh water, which has evidently a volume of 1,26 lt; i.e. every liter of diesel fuel produces at least 1,033 liters, or kg, of fresh water.

Tank 4, or tanks 4, have two distinct penetrations; 35, which goes inside volume "b", which has the top made by the flexible diaphragm 5, for the filling and the feeding of the fuel during the functioning of the engine, and 34, outside volume "b", in volume "a", for the filling and subsequent discharge of the water produced during the combustion. Volume "a" is separated by volume "b", by the flexible waterproof diaphragm 5.

The fuel, through feeding pump 26 flows inside the recycling circuit 23 to supply I.C. engine 25.

The water produced during the combustion is collected a the outlet 29 of the recycling circuit 23 by the water pump 6, filtered by filter 7 and pumped through line 8 in fuel tank 4 through inlet 34 positioned in volume "a" which is separated by diaphragm 5 from the fuel contained in volume "b"; the water thus fills volume "a" and never comes in contact with the fuel, but fills the volume made available by the fuel itself consumed by the engine.

From outlet 28, where the CO2 is expelled from recycling circuit 23 together with the oxygen surplus, due to combustion in "excess air", a single stage "overpressor", i.e. a high pressure compressor which can accept at the inlet a gas above atmospheric pressure, or a multistage intercooled "overpressor" 9, with an aftercooler cooled by sea-water circulation not indicated in fig. 2, compresses the CO2, or the mixture of CO2 + O2, at a pressure never below 40 ata, or above that but never less than 40 ata, and cools the so compressed gas at a temperature in the neighbourhood of 35° C or in any way above the temperature of the sea-water by at least 6° C or more in order not to oversize the heat exchangers.

From overpressor 9 the so cooled and compressed gas is sent to filter deumidifier 10 and from there to the gravity separator 11. From the top of 11 line 13 collects the mixture, rich in oxygen content, and through pressure reducer/metering valve 12 sends it into mixing intake chamber 37 of I.C. engine 25 in the recycling circuit 23.

From the bottom of gravity separator 11, line 14 collects the mixture very rich in CO2 and sends it to valve 15.

Line 14 is equipped with the by-pass 39-40 and the "overpressor" 38; "overpressor "38 is equipped with an aftercooler cooled by sea-water.

Let us now examine the operation of the closed circuit, subject of the present invention, installed within a closed volume 36 which schematizes the pressure hull of the submarine, and let us assume that the submarine is exploring a shallow water area with surface water temperature around 27°C, or, a deep water volcanic area with stratifications, or layers of sea water at the same temperature; in both cases it is mandatory to keep a constant displacement in order to keep control on the variation of depth.

As soon as the I.C. engine 25 is started, and it is running in the semiclosed mode according to the recycling circuit 23, as indicated in any of the previous inventions, the engine is consuming oxygen, either stored in liquid or gaseous form, from tanks 2 or 3, and liquid fuel supplied by tank 4, or the system made of several tanks type 4.

The water vapour produced by the combustion is condensated by the recycling system 23 and through pump 6, after filtration of the unburnt particles in filter 7, is stored in volume "a" of tank 4, from which tank the fuel has been supplied to the engine; the volume "a" of tank 4 is separated by the waterproof diaphragm 5 from the fuel contained in volume "b" of the same tank and the water produced by combustion is entering the volume "a" through penetration 34.

As already indicated in the previous description the total volume "a+b" of tank 4 is bigger than volume "b" of the fuel by at least 3%; bearing in mind that one liter of diesel fuel with specific density of 0,82 kg/liter produces during the combustion with oxygen about 1,033 kg of fresh water, i.e. about 1,033 liters, with the proposed system the water produced by the combustion is stored on board without polluting the fuel nor requesting a new, dedicated tank, which would substract a further volume from closed volume 36 of the submarine, in this beeing totally different from all alternatives considered by all previous inventions depicted in the referred Patents examined by us.

The system applies even if tank 4 is installed overboard pressure resistant volume 36, but within the "envelop displacement" of the submarine, in order not to pollute neither the fuel nor the sea with the pollutant which cannot be filtered.

The Carbon Dioxide and the residual oxygen eventually present in the exhaust gases, as a consequence of the combustion taking place with an "excess air", are expelled from outlet 28 of recycling circuit 23 with a certain over pressure above atmospheric; such overpressure depends on the solution selected in the manufacturing of recycle circuit 23 but it is always an overpressure of some kinds as indicated in all the Patents examined by us and quoted in the introduction.

With this pressure above atmospheric they exit from outlet 28 to enter on the "overpressor" 9, single stage or multistage with intercooler, and aftercooler, all cooled by the sea-water which acts as a heat sink.

As already mentioned by "overpressor" we indicate a high pressure compressor, mono or multi stage, which can accept at the inlet a gas with a pressure well above the atmospheric pressure.

In the last aftercooler, which is part of the "overpressor" 9 and which is not specifically indicated in fig. 2, the sea-water will cool the compressed mixture at a temperature which will be above the critical temperature of the CO2; namely above 31°,5 centigrade.

Therefore the mixture, always in the gaseous phase, will be conveyed to the filter/deumidifer 10, in order to purify the gaseous mixture from traces of unburnt particles, luboil etc and to eliminate the water vapour still present, and will than be conveyed to the gravity separator 11.

It is a subject of the present invention the selection of the minimum delivery pressure of the "overpressor" 9 in order to allow proper gravity separation; such pressure must be 40 ata, and therefore the minimum working pressure of the gravity separator must be 40 ata as well.

Assuming that the volumetric oxygen percentage in the exhaust gases is of 10%, having set the minimum set pressure of the separator at 40 ata we will have as a result a partial pressure of the CO2 of 36,0 ata and of the oxygen of 4 ata. Under these conditions, even if the temperature is as little as 32°C the specific weight of the CO2 is about 85 kg/mc while that of the oxygen is of about 50 kg/mc.

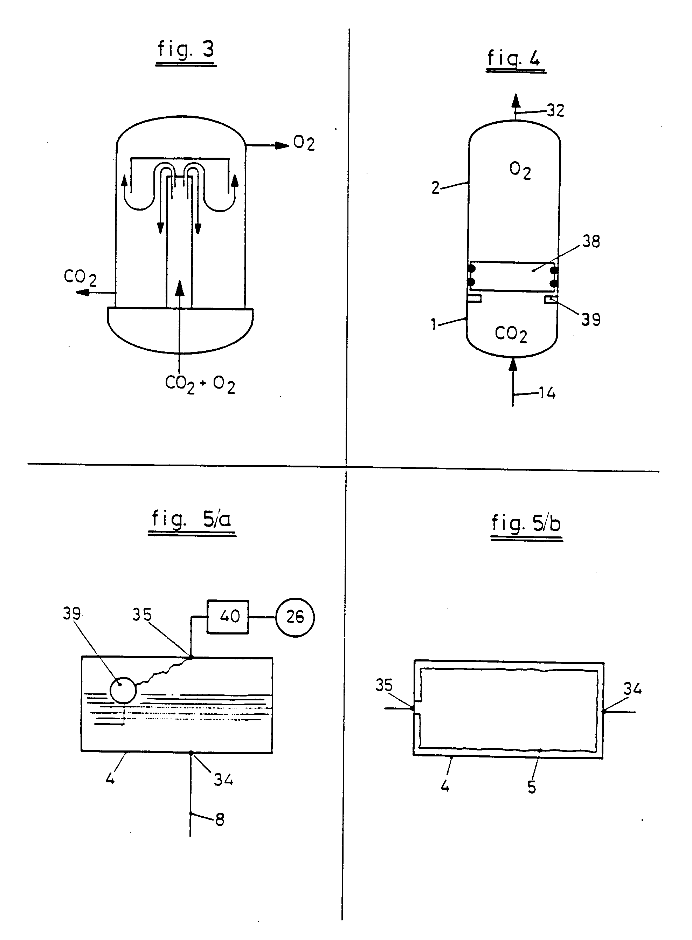

It can been clearly seen how, entering the gaseous mixture in gravity separator 11, build according the principle of fig. 3, in the higher part it will concentrate the light fraction while in the lower part it will concentrate the heavy fraction.

From the higher part of the separator 11, fig. 2, line 14 extracts and conveys the lighter fraction, enriched with O2, to valve 12. Valve 12, a pressure reducing/metering valve, while maintaining in circuit 13 a minimum pressure of 40 ata, reduces the pressure and meters the light fraction to mixing the intake chamber 37 of I.C. engine 28.

From the lower part of separator 11 line 14 flows the heavier gaseous fraction, rich in CO2, to valve 15, a pressure reducer which mantains in line 14 the minimum pressure of 40 ata as in the gravity separator 11, and fills service tank 1, which in the beginning is empty, at the delivery pressure of "overpressor 9".

During this phase the I.C. engine, or the gas turbine, is supplied with oxygen from tank 2, or systems of tanks 2, through three way valve 16 turned in such a way as to connect line 32 with tank 2, and three way valve 16′ turned in such a way as to close oxygen tank 3, or set of oxygen tanks 3, but allows the flow of oxygen from tank 2 to line 32.

In these conditions the circuit as described, and as contained in submarine volume 36 is fully closed and the mass is kept rigorously constant within said volume; nothing goes in nor goes out from submarine 36. As oxygen tank 2, or set of oxygen tanks 2, is approaching depletion valve 16 will be turned from line 32 to line 21 through manifold 17; vacuum pump/compressor 18 will start sucking oxygen, from the depleted tank, or tanks, filling pressure tank 19 and, in doing so keeping the supply of oxygen tomixing chamber 37, of the I.C. engine with exhaust recycling, through pressure reducer/metering valve 20. Vacuum pump/compressor 18 and pressure tank 19 are dimentioned in such a ways as to empty oxygen tanks 2, or system of oxygen tanks 2, before service pressure tank 1 is beeing filled to the maximum of its capacity.

When the oxygen tank 2, or system of tanks 2 is near full depletion, three way valve 16′ opens oxygen tank 3, or system of oxygen tank 3, to mixing chamber 37 through line 32 and pressure reducer/metering valve 24.

It is possible also to operate this connection when oxygen tank 2, or system of tanks 2, is fully depleted; in this case the vacuum pump/compressor 18 is designed with a volumetric delivery well above the volumetric oxygen consumption of the engine 25.

Once depleted oxygen tank 2, or system of oxygen tanks 2, from its original oxygen content, tank 1 is connected with tank 2, or system of tanks 2, now empty from its original oxygen charge.

Therefore now there is available a new volume, previously occupied by the oxygen, ready to accept $CO_2$ produced by the combustion of fuel from tank(4) with oxygen from tank(3),even if the $CO_2$ is in gaseous form because of the 27° centigrade temperature of the sea-water acting as heat sink.

With this invention that we have so described any exhaust gases recycling system for any I.C.engine, or gas turbine, built according to one of the examined Patents or any other system, is made completely closed maintaining the constancy of the mass in relation to the submarine volume 36, without extra tanks for the water produced nor cryogenic or extra tanks for the $CO_2$ produced and

with the minimum energy for compression, notwithstanding the sea-water temperature near the critical point of the $CO_2$.

One of the subject of this invention, is also the storage of the water produced during the combustion in the same tank used for storage of the fuel,and another is the storage of the $CO_2$, produced during the combustion, in the same tanks used for the storage of the oxygen without need of liquification, regardless of the water depth and of the sea-water temperature. Moreover, because of this system, the oxygen present in the exhaust gases is separated from the gaseous $CO_2$ and recovered for combustion.

The pressure resistant service tank (1),the vacuum pump/compressor(18), the fuel tank(4) with diaphram(5), the overpressor(9)and the gravity separator(11), represent the hard core of the invention.

In fig. 4 we indicate a possible variation in the assembly of service tank pressure resistent (1) and oxygen tanks 2 and 3.

In the same pressure vessel service tank (1) and oxygen tank (2) are made by a mobile piston (38) with gaskets, which rests on stop (39), so dividing the same tank in two separate volumes indicated as $CO_2$ and $O_2$.

In this case, see fig. 2, once the volume of $CO_2$ has been filled by "overpressor" (9), overpressor (38) intervens, equipped with intercoolers and aftercoolers refrigerated by seawater and not indicated in fig.2, with the operation of by-pass 39-40. In this way it is possible to make full use of the total volume 2 .

It is evident, for example, that "overpressor"-(9) and "overpressor" (38) can be embodied in one "overpressor" only.

Vacuum pump/compressor (18) can be a rotary machine, in lieu of a membrane machine or a reciprocating machine.

Fuel tank (4) can be manufactured, in alternative,as indicated in fig. 5a or 5b.

In fig. 5a the fuel tank, rigid or collapsable, is one only; the intake(35) of the fuel is equipped with a floater for the suction of the fuel supply pump 26, always sucking from the top of the liquid.

In this case before the intake of the pump a fuel/water separator is installed, to eliminate the polluting water.

Supply line 8 of the water produced during combustion has inlet 34 installed in the lower part of the tank, which in any case will have a total volume well above the minimum 3% over the volume of fuel, as set in the previous pages.

In fig. 5/b tank 4, rigid or collapsible, contains within itself a second collapsable tank 5. In the solution depicted by fig. 5/b the fuel is contained within collapsable tank 5; therefore the volume between tank 4 and 5 must be more than the 3% indicated, to take care also of the volume of tank 5 once collapsed.

At the end of the mission the tanks 1,2 and 3, or the systems of tanks 1,2 and 3 will be thoroughly washed with a solvent, freon for example, after having beeing emptied through valve 27; the washing will take place through same value 27 and vacuum pump/compressor 18 and pressure reducer/metering valve 19 by means of an "ad-hoc" by pass not indicated in fig. 2.

## Claims

1. Closed circuit system in a Submarine, consisting of a diesel engine (25), or a gas turbine, operating by the recycling of the exhaust gases, a set of fuel tanks (4) and a set of oxygen tanks (2 and 3), liquid or gaseaous, characterized by the fact that the water produced by the combustion is stored in the same fuel tanks (4) and the $CO_2$ produced by the combustion is stored, even in gaseous phase, in the same oxygen tanks (2 and 3) after that said tanks have been emptied from the oxygen itself used to support combustion, and that the storage temperature is slightly above the sea water temperature at a minimum storage pressure of 40 ata (absolute athmospheres).

2. Closed circuit system as set forth in claim 1 characterized by the fact that each tank (4) for the liquid fuel is equipped with a flexible waterproof diaphram(5) separating the fuel itself from the water produced by the combustion which is pumped in the same tank during operation of the engine supplied with fuel from said tank.

3. Closed circuit system, as set forth in claim 2 characterized by the fact that the total volume of the fuel tank(4) made by the two partial volumes(a,b) separated by that flexible diaphram (5) has a net volume which is bigger by at least 3% than the total volume of the stored fuel.

4. Closed circuit system as set forth in claim 3, characterized by the fact that the fuel tank (4) do not overflow freely in the volume of the submarine.

5. Closed circuit system, as set forth in all previous claims characterized by the fact that the water produced during the combustion is filtered in order to retain unburnt particles and other impurities before beeing sent for storage in the same fuel tank from which the fuel has been supplied to the engine.

6. Closed circuit system, as set forth in all previous claims characterized by the fact that in the $CO_2$ recovery system, meaning the recovery of the $CO_2$ produced by the combustion, there is one buffer tank (1) made of a pressure resistant vessel which can contain in weight at least the $CO_2$ equivalent to the one produced by the oxygen contained in one of the oxygen tank (2,3), in such a way that said oxygen tank can be fully emptied while the buffer tank (1) is beeing filled with $CO_2$, basing said oxygen fed to recycled engine (25) and said $CO_2$ beeing produced by the same engine.

7. Closed circuit system as set forth in claims 1 and 6 characterized by the fact that in the circuit of the oxigen supply to the engine (25) operating with the recycle of the exhaust gases, there is a vacuum pump/compressor (18) which allows the total emptying of each oxygen tank (2,3) after said tank has reached its minimum supply pressure to said engine.

8. Closed circuit system as set forth in claim 7 characterized by the fact that the vacuum pump/compressor (18) depletes completely the oxygen tanks (2,3), after they have reached the minimum engine supply pressure, filling at the same time an auxiliary pressure vessel (19), from which to supply, at the standard supply pressure, the engine operating with the recycle of the exhaust gases, with the oxygen recovered in such manner.

9. Closed circuit system, as set forth in claims 1 and 6 through 8 characterized by the fact that the $CO_2$ produced by the combustion, and the residual oxygen, if any, present in the exhaust gases, are extracted from the recycled system (23) itself and used to supply a medium/high pressure compressor (9), named "overpressor", mono or multi stage with intercooler and aftercooler cooled by the sea water at sea pressure and temperature, which "overpressor" compresses said gases to a minimum pressure of 40 ata, absolute athmospheres, regardless of the water depth and of the sea water temperature.

10. Closed circuit system, as set forth in claim 9 characterized by the fact that the minimum pressure of the "overpressor"(9) is of 125 ata (absolute atmospheres) regardless of the water depth and of the sea water temperature.

11. Closed circuit system as set forth in claim 10 characterized by the fact that after the "overpressor"(9) of claim 10, there is installed a filter (10) with a filtering capacity of 10 micron.

12. Closed circuit system as set forth in claim 11 characterized by the fact that after filtration the gaseous CO2 and the O2 fraction are deumidified.

13. Closed circuit system as set forth in claim 12 characterized by the fact that the CO2 and the O2 in gaseous phases are separated by gravity.

14. Closed circuit system as set forth in claim 13 characterized by the fact that so separated CO2 is stored, even in gaseous form, in the pressure service tank (1).

15. Closed circuit system as set forth in claim 14 characterized by the fact that during the same period of time during which the pressure service tank (1) of claim 6 and 14 is beeing filled an oxygen tank (2 or 3) is beeing completely emptied which weight of oxygen is equivalent to the weight of the CO2 produced by the combustion supported by the same oxygen, and said CO2 is so stored in the above mentioned service pressure tank (1).

16. Closed circuit system as set forth in claim 15 characterized by the fact that with a set of valves (27) it is possible to empty the oxygen tanks (1,2,3) from the products of combustion and that through the same valves (27) it is possible to clean said tanks with cleaning fluids such as freon.

17. Closed circuit system as set forth in all previous claims characterized by the fact that the indicated components, contained in given "envelope displacement" constitute a closed circuit system with the constancy of mass because the products of combustion are not expelled overboard, but are always kept within the said "envelope displacement" in the fuel and oxygen tanks once emptied from fuel and oxygen.

**Patentansprüche**

1. Geschlossenes Umlaufsystem für die Rückführrung von Auspuffgasen einer Brennkraftmaschine für Tauchboote, bestehend aus einem Dieselmotor (25) oder einer Gasturbine, die mit Abgas-Recycling betrieben werden, aus einer Anzahl von Kraftstofftanks (4) und einer Anzahl von flüssigen oder gasförmigen Sauerstoff aufweisenden Sauerstofftanks (2 und 3),
**dadurch gekennzeichnet,**
- daß das durch den Verbrennungsvorgang entstehende Wasser in den Kraftstofftanks (4) gespeichert wird,
- daß das durch den Verbrennungsvorgang entstehende $CO_2$ auch in der Gasphase jeweils in einem der Sauerstofftanks (2 und 3) gespeichert wird, nachdem der betreffende Tank zur Unterstützung des Verbrennungsvorganges vom Sauerstoff geleert ist,
- und daß die Speichertemperatur bei einem Mindestspeicherdruck von 40 ata geringfügig über der Temperatur des Meerwassers liegt.

2. Geschlossenes Umlaufsystem nach Anspruch 1,
**dadurch gekennzeichnet,**
daß jeder Kraftstofftank (4) für den flüssigen Kraftstoff mit einer flexiblen, wasserundurchlässigen Membran (5) ausgestattet ist, welche den Kraftstoff von dem Wasser trennt, das durch den Verbrennungsvorgang entsteht, und während des Arbeitens der Maschine in den gleichen Brennstofftank (4) gepumpt wird, dessen Brennstoff der Maschine zugeführt wird.

3. Geschlossenes Umlaufsystem nach Anspruch 2,
**dadurch gekennzeichnet,**
daß das Gesamtvolumen des Kraftstofftanks (4) zwei Teilvolumina (a, b) aufweist, die durch die flexible Membran (5) gegeneinander abgetrennt sind, und daß das reine Gesamtvolumen das gesamte Volumen des gespeicherten Kraftstoffes um mindestens 3 % überschreitet.

4. Geschlossenes Umlaufsystem,
**dadurch gekennzeichnet,**
daß der Inhalt des Brennstofftanks (4) nicht frei in die Zelle des Tauchbootes überzulaufen vermag.

5. Geschlossenes Umlaufsystem nach mindestens einem der vorhergehenden Ansprüche,
**dadurch gekennzeichnet,**
daß das durch den Verbrennungsvorgang erzeugte Wasser vor seiner Überführung zum Zwecke der Speicherung in dem gleichen Kraftstofftank, von dem Kraftstoff zur Versorgung der Maschine entnommen wird, gefiltert wird, um Verbrennungsrückstände und Verunreinigungen zurückzuhalten.

**6.** Geschlossenes Umlaufsystem nach mindestens einem der vorhergehenden Ansprüche, **dadurch gekennzeichnet,** daß die $CO_2$-Rückgewinnungsanordnung für die Rückgewinnung des durch den Verbrennungsvorgang entstehenden $CO_2$ einen Puffertank (1) aufweist, der als druckfester Behälter ausgeführt ist und gewichtsmäßig mindestens die $CO_2$-Menge aufzunehmen vermag, die durch die Verbrennung des Sauerstoffes eines der Sauerstofftanks (2, 3) entsteht, so daß der betreffende Sauerstofftank völlig entleerbar ist, während der Puffertank (1) mit $CO_2$ gefüllt wird, wobei der Sauerstoff der im Kreislauf betriebenen Maschine (25) zugeführt wird und das $CO_2$ von der gleichen Maschine erzeugt wird.

**7.** Geschlossenes Umlaufsystem nach einem der Ansprüche 1 und 6, **dadurch gekennzeichnet,** daß die Anordnung zur Speisung der die rückgewonnenen Verbrennungsgase liefernden Maschine (25) mit Sauerstoff eine Vakuumpumpe und/oder einen Kompressor (18) aufweist, der den jeweils Sauerstoff liefernden der Sauerstofftanks (2, 3) vollständig zu entleeren vermag, auch nachdem der in diesem Tank herrschende Druck unter das für die Versorgung der Maschine (25) erforderliche Versorgungsdruckminimum abgesunken ist.

**8.** Geschlossenes Umlaufsystem nach Anspruch 7, **dadurch gekennzeichnet,** daß die Versorgungspumpe bzw. der Kompressor (18) den jeweils bis auf den Mindestversorgungsdruck leergefahrenen der Sauerstofftanks (2, 3) völlig entleert und den entnommenen Sauerstoff einem Hilfsdruckbehälter (19) zuführt, von dem aus die mit der Rückgewinnung ihrer Abgase arbeitende Maschine (25) mit dem so gewonnenen Sauerstoff mit ihrem üblichen Versorgungsdruck gespeist wird.

**9.** Geschlossenes Umlaufsystem nach einem der Ansprüche 1 und 6 bis 8, **dadurch gekennzeichnet,** daß das durch den Verbrennungsvorgang erzeugte $CO_2$ sowie gegebenenfalls in den Verbrennungsgasen enthaltener Restsauerstoff durch die Recycling-Anordnung (23) aus den Verbrennungsgasen herausgezogen und einem einstufigen oder mehrstufigen, als "Overpressor" bezeichneten Mittel- oder Hochdruckkompressor (9) zugeführt werden, dem ein Zwischenkühler und/oder Nachkühler zugeordnet sind, die mit Meerwasser unter dem jeweils herrschenden Druck sowie dessen Temperatur gekühlt werden, und daß die Gase unabhängig von der Wassertiefe oder -temperatur auf mindestens 40 ata verdichtet werden.

**10.** Geschlossenes Umlaufsystem nach Anspruch 9, **dadurch gekennzeichnet,** daß der "Overpressor" unabhängig von der Tauchtiefe und der Meerestemperatur für einen Mindestdruck von 125 ata ausgelegt ist.

**11.** Geschlossenes Umlaufsystem nach Anspruch 10, **dadurch gekennzeichnet,** daß dem "Overpressor" (9) ein Filter einer Maschengröße von 10 Mikron nachgeordnet ist.

**12.** Geschlossenes Umlaufsystem nach Anspruch 11, **dadurch gekennzeichnet,** daß nach der Filtration das gasförmige $CO_2$ sowie die $O_2$-Fraktion getrocknet werden.

**13.** Geschlossenes Umlaufsystem nach Anspruch 12, **dadurch gekennzeichnet,** daß das $CO_2$ und das $O_2$ in ihrer Gasphase durch Schwerkrafteinwirkung voneinander getrennt werden.

**14.** Geschlossenes Umlaufsystem nach Anspruch 13, **dadurch gekennzeichnet,** daß das derart abgetrennte $CO_2$ gasförmig im Puffertank (1) gespeichert wird.

**15.** Geschlossenes Umlaufsystem nach Anspruch 14, **dadurch gekennzeichnet,** daß in dem Zeitraum, in dem der Puffertank (1) nach Ansprüchen 6 oder 14 gefüllt wird, ein Sauerstofftank (2 oder 3) vollständig geleert wird, wobei das Gewicht des Sauerstoffes gleichwertig dem des $CO_2$ ist, welches durch die Verbrennung des gleichen Sauerstoffes unterstützt wird, und wobei dieses $CO_2$ in dem oben bezeichneten Puffertank (1) gespeichert wird.

**16.** Geschlossenes Umlaufsystem nach Anspruch 15, **dadurch gekennzeichnet,** daß eine Anzahl von Ventilen (27) vorgesehen ist, die es gestatten, die Sauerstofftanks (1, 2, 3) von den Verbrennungsprodukten zu entleeren, und daß die Sauerstofftanks mit Reinigungsflüssigkeiten, bspw. mit Freon, reinigbar sind.

17. Geschlossenes Umlaufsystem nach einem der vorhergehenden Ansprüchen,
**dadurch gekennzeichnet,**
daß die angegebenen Komponenten, die im vorgegebenen Verdrängungsraum enthalten sind, einen geschlossenen Kreislauf mit einer Konstanz der Massen bilden, da die Verbrennungsprodukte nicht außer Bords abgegeben werden, sondern stets in den Kraftstoff-(4) und Sauerstofftanks (2, 3) nach deren Leerung und damit innerhalb des Verdrängungsraumes gehalten werden.

## Revendications

1. Système en circuit fermé dans un sous-marin, comprenant un moteur Diesel (25) ou une turbine à gaz, fonctionnant par le recyclage des gaz d'échappement, un jeu de réservoirs de carburant (4) et un jeu de réservoirs d'oxygène (2 et 3), à l'état liquide ou gazeux, caractérisé par le fait que la vapeur qui est produite par la combustion est emmagasinée dans les mêmes réservoirs de carburant (4) et le $CO_2$ qui est produit par la combustion est emmagasiné, même en phase gazeuse, dans les mêmes réservoirs d'oxygène (2 et 3), après que ces réservoirs ont été vidés de l'oxygène lui-même utilisé pour permettre la combustion, et en ce que la température de stockage est légèrement supérieure à la température de l'eau de mer à une pression absolue de stockage minimale de 4 MPa.

2. Système en circuit fermé selon la revendication 1, caractérisé par le fait que chaque réservoir (4) pour le carburant liquide est équipé d'un diaphragme étanche et flexible (5) qui sépare le carburant lui-même de l'eau produite par la combustion, qui est pompée dans le même réservoir pendant le fonctionnement du moteur qui est alimenté avec du carburant provenant de ce réservoir.

3. Système en circuit fermé selon la revendication 2, caractérisé par le fait que le volume net total du réservoir de carburant (4) constitué par les deux volumes partiels (a, b) séparés par le diaphragme flexible précité (5) est supérieur d'au moins 3% au volume total du carburant emmagasiné.

4. Système en circuit fermé selon la revendication 3, caractérisé par le fait que le contenu du réservoir de carburant (4) ne déborde pas librement dans le volume du sous-marin.

5. Système en circuit fermé selon l'ensemble des revendications précédentes, caractérisé par le fait que l'eau qui est produite pendant la combustion est filtrée de façon à retenir des particules non brûlées et d'autres impuretés, avant d'être dirigée vers le réservoir de carburant à partir duquel le carburant a été fourni au moteur, pour être emmagasinée dans ce réservoir.

6. Système en circuit fermé selon l'ensemble des revendications précédentes, caractérisé en ce que le système de récupération du $CO_2$, c'est-à-dire le système qui récupère le $CO_2$ produit par la combustion, comprend un réservoir tampon (1) constitué par une enceinte résistant à la pression qui peut contenir, en masse, une quantité de $CO_2$ au moins équivalente à celle que produit l'oxygène contenu dans l'un des réservoirs d'oxygène (2, 3), d'une manière telle que ce réservoir d'oxygène puisse être complètement vidé pendant que le réservoir tampon (2) est rempli avec du $CO_2$, dans des conditions dans lesquelles l'oxygène alimente le moteur à recyclage (25) et le $CO_2$ est produit par le même moteur.

7. Système en circuit fermé selon la revendications 1 et 6, caractérisé par le fait que le circuit de l'alimentation en oxygène du moteur (25) fonctionnant avec le recyclage des gaz d'échappement, contient une pompe à vide/compresseur (18) qui permet de vider totalement chaque réservoir d'oxygène (2, 3) après que le-réservoir a atteint sa pression d'alimentation minimale pour le moteur.

8. Système en circuit fermé selon la revendication 7, caractérisé par le fait que la pompe à vide/compresseur (18) vide complètement les réservoirs d'oxygène (2, 3), après qu'ils ont atteint la pression d'alimentation minimale du moteur, et elle remplit simultanément une enceinte sous pression auxiliaire (19), à partir de laquelle le moteur fonctionnant avec le recyclage des gaz d'échappement est alimenté, à la pression d'alimentation normale, avec l'oxygène qui est récupéré de cette manière.

9. Système en circuit fermé selon les revendications 1 et 6 à 8, caractérisé par le fait que le $CO_2$ qui est produit par la combustion, et l'oxygène résiduel éventuel se trouvant dans les gaz de combustion, sont extraits du système à recyclage (23) lui-même, et sont utilisés pour alimenter un compresseur à moyenne/haute pression (9), appelé "surpresseur", du type à un étage ou à plusieurs étages avec refroidisseur intermédiaire et postrefroidisseur refroidis par l'eau de mer, à la pression et à la température de la mer, ce "surpresseur" comprimant les gaz précités jusqu'à une pression absolue minimale de 4 MPa, indépendamment de la profondeur de l'eau et de la température de l'eau de mer.

10. Système en circuit fermé selon la revendication 9, caractérisé par le fait que la pression absolue minimale du "surpresseur" (9) est de 12,5 MPa, indépendamment de la profondeur de l'eau et de la température de l'eau de mer.

11. Système en circuit fermé selon la revendication 10, caractérisé par le fait qu'un filtre (10) ayant une capacité de filtration de 10 microns est installé après le "surpresseur" (9) de la revendication 10.

12. Système en circuit fermé selon la revendication 11, caractérisé par" le fait que le $CO_2$ gazeux et la fraction d'$O_2$ sont déshumidifiés après la filtration.

13. Système en circuit fermé selon la revendication 12, caractérisé par le fait que le $CO_2$ et l'$O_2$ en phase gazeuse sont séparés par gravité.

14. Système en circuit fermé selon la revendication 13, caractérisé par le fait que le $CO_2$ qui est ainsi séparé est emmagasiné, même sous forme gazeuse, dans le réservoir de service sous pression (1).

15. Système en circuit fermé selon la revendication 14, caractérisé par le fait que pendant l'intervalle de temps au cours duquel le réservoir de service sous pression (1) des revendications 6 et 14 est rempli, un réservoir d'oxygène (2 ou 3) est complètement vidé, la masse d'oxygène de ce réservoir étant équivalente à la masse du $CO_2$ qui est produit par la combustion permise par l'oxygène considéré, et le $CO_2$ étant emmagasiné dans le réservoir de service sous pression (1) précité.

16. Système en circuit fermé selon la revendication 15, caractérisé par le fait qu'au moyen d'un jeu de vannes (27), il est possible d'extraire entièrement des réservoirs d'oxygène (1, 2, 3) les produits de la combustion, et que par les mêmes vannes (27), il est possible de nettoyer ces réservoirs avec des fluides de nettoyage tels que du Fréon.

17. Système en circuit fermé selon l'ensemble des revendications précédentes, caractérisé par le fait que les éléments indiqués, contenus dans une "enveloppe de déplacement" donnée, constituent unn système en circuit fermé à masse constante, du fait que les produits de combustion ne sont pas expulsés à l'extérieur, mais sont toujours conservés à l'intérieur de "l'enveloppe de déplacement" dans les réservoirs de carburant et d'oxygène, une fois que ceux-ci ont été vidés du carburant et de l'oxygène qu'ils contenaient.

fig. 1

fig. 2

fig. 3

fig. 4

fig. 5/a

fig. 5/b